# EUROPEAN PATENT SPECIFICATION

(11) **EP 1 193 387 B1**
(45) Date of publication and mention of the grant of the patent: **27.07.2005**
(21) Application number: 00308464.7
(22) Date of filing: 27.09.2000
(51) Int. Cl.: F02M 21/02

(54) **Gaseous fuel injector**
Gaseinspritzventil
Injecteur à gaz

(43) Date of publication of application: 03.04.2002
(73) Proprietor: Quantum Fuel Systems Technologies Worldwide, Inc., Irvine, California 92614 (US)
(72) Inventor: Press, Roman, Pittsford, New York 14534 (US)
(74) Representative: Beresford, Keith Denis Lewis

(56) References cited:
- EP-A- 0 207 261
- EP-A- 0 480 609
- WO-A-92/05357
- WO-A-98/08014
- WO-A-99/18345
- US-A- 3 592 392
- US-A- 4 763 635
- US-A- 5 348 233
- US-A- 5 398 657

## Description

### BACKGROUND OF THE INVENTION

### 1.Field of the Invention.

This invention relates to gaseous fuel injectors for propulsion systems and more particularly to such an injector which utilizes an electromagnetic solenoid with a flat armature which forms a valve for the injector.

### 2.Description of the Related Art.

Gaseous fuel injection systems are commonly used in supplying fuel to engines. Such systems generally utilize a spherical ball type valve which is attached to a pintle which moves in the central portion of the solenoid. A typical such prior art fuel injector is described in US patent no. 5,775,599 issued July 7, 1998 to Smith et al. and assigned to Impco Technologies Inc., the assignee of the present application. For such systems to operate effectively, the fuel must provide enough lubrication to prevent a seizure of the plunger during its operation. With liquid fuel such lubrication is readily provided but with gaseous fuel, traces of compressor oil must be relied on. With the demand to increase the purity of gaseous fuel, compressors which do not use oil as a lubricant are now being extensively used, eliminating the entry of this lubricant into the fuel. The elimination of the lubricant, however, has resulted in the deterioration of the performance of typical prior art gaseous injectors.

To solve this problem, a gaseous fuel injector having a flat solenoid armature which seats directly on a seat member to form the fuel valve has been developed. This device is described in US patent no. 5,348,233 issued 9/20/94 to Roman Press, et al., said Roman Press being the inventor of the present invention. This prior invention, while solving the problem of wear on the valve mechanism, has the shortcoming of having a discharge nozzle which is not integrated with the injector and thus is not readily amenable to mass production. Further, the device of this prior art invention is adapted for fuel delivery to its central portion, not from the top, as in the present invention. In addition, the device of this prior invention is not designed for installation between a fuel rail and an injector port in a manner similar to a gasoline injector, as is the device of the present invention.

### SUMMARY OF THE INVENTION

The device of the present invention overcomes the aforementioned shortcomings of the prior art by utilizing a gaseous fuel injector according to claim 1. The injector is adapted to feed fuel from a fuel rail to an injector port in the same general manner as a gasoline injector. The device employs a solenoid mounted within a housing. The solenoid has a rectangular armature with a flat surface which in its "normal" or closed position abuts against a seat member to form a fluid valve. The armature is retained in this closed position by the pressure differential between the gas pressure and atmospheric pressure in conjunction with the force provided by a spring. When the solenoid is actuated by injection control pulses, the valve is opened in response to such pulses to permit pulses of gas to be injected from the injector. The armature has an aperture in its central portion to enable increased fluid flow and to reduce the force required to drive the armature. Also, the rectangular configuration of the armature affords additional fluid flow along the sides of the armature. Fuel is fed into the injector at one end thereof and out through the other end. When electrical pulses corresponding to the desired fuel injection are fed to the solenoid coil, the armature is correspondingly actuated to provide injection of fuel out from the injector.

It is therefore an object of this invention to provide an improved gaseous fuel injector in which the operational life of the components is substantially increased.

It is a further object of this invention to improve the efficiency of operation of a gaseous fuel injector.

Other objects of the invention will become apparent in view of the following description taken in connection with the accompanying drawings.

### DESCRIPTION OF THE DRAWINGS

FIG. 1 is a side elevational view of a preferred embodiment of the invention ;
FIG. 2 is a cross sectional view taken along the plane indicated by 2-2 in FIG. 1;
FIG. 3 is a cross sectional view taken along the plane indicated by 3-3 in FIG. 1;
FIG 4 is a cross sectional view showing the fluid valve of the preferred embodiment in a closed position;
FIG 5 is a cross sectional view showing the fluid valve of the preferred embodiment in an open position; and
FIG 6 is an exploded perspective view of the fluid valve of the preferred embodiment.

### DETAILED DESCRIPTION OF THE INVENTION

Referring now to the FIGS, a preferred embodiment of the invention is illustrated.

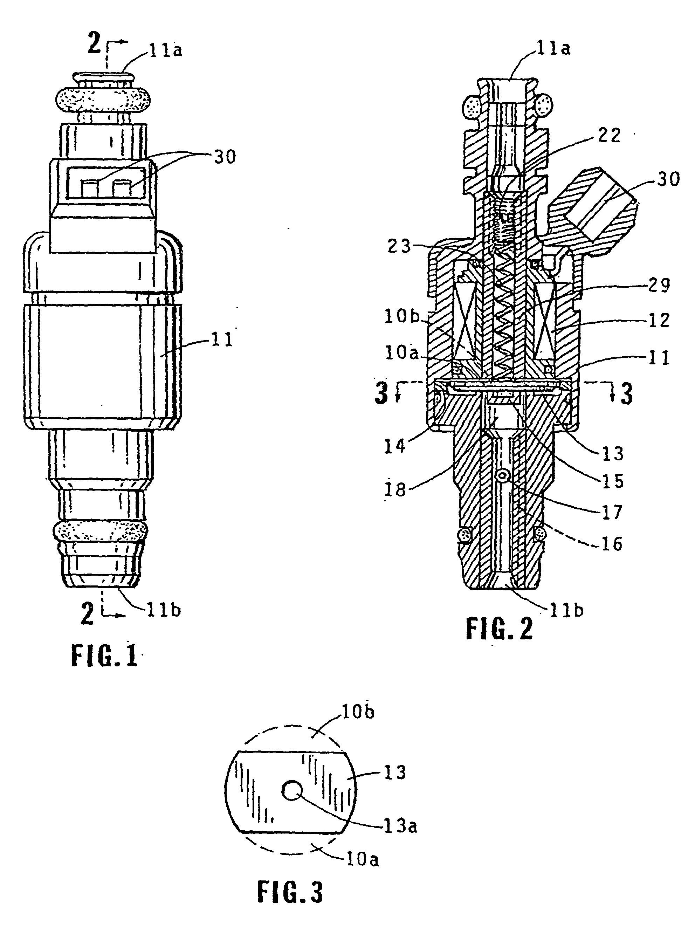

The injector has a housing 11 in which the components are mounted. An electromagnetic solenoid having a driving coil 12 and an armature 13 is mounted within the housing. Armature 13, as best can be seen in FIGS 3 and 6, has a generally rectangular configuration with a central aperture 13a. Aperture 13a and side spaces 10a and 10b located between the sides of the armature and spacer ring 14 provide openings for gaseous flow discharge. The armature 13 is welded to leaf spring 24, as indicated by the right hand pair of dashed lines in FIG 6. This assures repeatable positioning of the armature relative to spacer ring 14 and valve seat 15. Gaseous fuel is fed into an opening in the central magnetic pole 29 through inlet 11a and exited from the housing through outlet 11b. Radial slots formed in the internally threaded bore of the pole piece 29 and extending above and below the screw 22 provide a gas path past the screw 22.

Spring 23 abuts against the armature, the tension of the spring being adjustable by means of adjustment screw 22. Electrical control signals for controlling the solenoid and thus the injection are fed in through electrical terminals 30 and from these terminals to the solenoid coil 12. Central cylindrical magnetic pole piece 29 has an aperture 21 formed therein for providing additional fuel flow discharge. Noise abatement is provided by means of a resonant chamber 18 and channel 16. The flow of gas from the injector is adjustable by means of control valve 17.

The height of control spacer 14 is chosen to provide the desired travel of the armature by fixing the distance between central pole 29 and valve seat 15, thus determining the fuel flow from the injector.

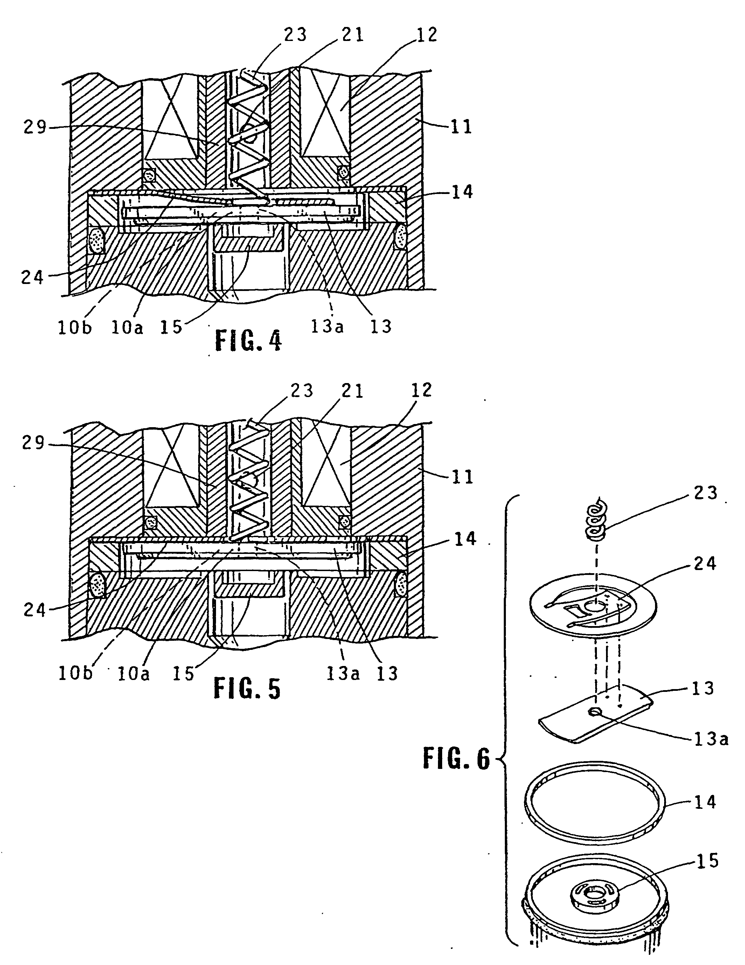

When an injection control signal is fed to coil 12, armature 13 is drawn upwardly countering the action of spring 23 and the differential pressures on the opposite sides of the armature and the action of spring 24. The armature is driven against the stop provided in the housing to open the valve by drawing the armature away from valve seat 15 thereby permitting gas to flow through the injector, as shown in FIG 5.

In the absence of a control signal, the armature valve is kept in its closed position by virtue of the action of coil spring 23 and leaf spring 24 with the armature in abutment against valve seat 15, as shown in FIG 4.

It is to be noted that while the device of the invention has been described for use in feeding fuel to an engine, it can also be used for other applications requiring the injection of gaseous fuel such as, for example, in propulsion systems using fuel cells.

While the invention has been described and illustrated in detail it is to be understand that this is intended by way of illustration and example only, the scope of the invention being limited by the terms of the following claims.

## Claims

1. A gaseous fuel injector for use in feeding gaseous fuel, the injector comprising:
a housing (11);
an electrically controlled injector having an armature (13) and a solenoid coil (12) mounted in said housing;
a single valve seat member (15);
said armature (13) having a substantially flat surface in opposing substantially parallel relationship with said valve seat member;
means (23, 24) for urging said armature to bring the flat surface thereof in abutment against the valve seat member to provide a closed valve position;
an inlet (11a) for gaseous fuel at one end of said housing and a single outlet passage (11b) at the opposite end thereof; and
wherein said solenoid coil is operable to drive said armature away from said valve seat member to an open position thereby opening the valve formed thereby to permit gaseous fuel to pass from said inlet (11a) to said outlet passage (11b) of said housing,
**characterised in that** the said armature is generally rectangular and is positioned within a spacer ring (14), and side spaces (10a, 10b) through which fuel may flow from the inlet (11a) to the valve seat member (15) when the armature (13) is in its open position are defined between side edges of the armature and the spacer ring (14).

2. The fuel injector of claim 1, wherein said armature has a second flat surface opposite the flat surface in opposing relationship with the valve seat member (15), and further including a leaf spring (24) attached to said second flat surface for positioning the armature relative to the valve seat member (15) and the spacer ring (14), and for resiliently urging said armature towards the valve seat member.

3. The fuel injector of claim 1 or claim 2, further including resonant chamber means (18) and a channel (16) communicating with the outlet (11b) for abating noise.

4. The fuel injector of any preceding claim, wherein said spacer (14) has a predetermined height which determines the travel distance of said armature (13) between its open and closed positions.

5. The fuel injector of any preceding claim, wherein said armature has a central aperture (13a) formed therein for passing additional fuel therethrough when said armature is in its open position.

6. The fuel injector of any preceding claim, wherein said injector is integrally formed.

7. An injector according to any of claims 1 to 5, wherein the housing comprises two housing portions (11, 15) separated by a spacer (14), and the armature (13) is mounted between the two housing portions.

8. A fuel injection system, comprising:
at least one fuel injector according to any of claims 1 to 7;
means for supplying gaseous fuel to the fuel inlet (11a) of the injector;
means for leading gaseous fuel from the outlet passage (11b) of the injector; and
control means for feeding control pulses to said solenoid coil (12) to drive said armature (13) from its closed position to its open position.

## Patentansprüche

1. Gastreibstoff-Injektor zur Verwendung bei der Zufuhr von gasförmigem Treibstoff, aufweisend:
ein Gehäuse (11),
einen elektrisch gesteuerten Injektor mit, im Gehäuse befestigt, einer Solenoid-Spule (12) und einem Anker (13),
ein einziges Ventilsitzelement (15),
wobei der Anker (13) eine im wesentlichen flache Fläche aufweist, die dem Ventilsitzelement im wesentlichen parallel gegenüberliegt,
eine Einrichtung (23, 24) um den Anker so zu drängen, daß seine flache Fläche in Anschlag gegen das Ventilsitzelement gebracht wird, um eine geschlossene Ventilstellung zu liefern, und
einen Einlaß (11a) für gasförmigen Treibstoff an einem Ende des Gehäuses und eine einzige Auslaßleitung (11b) an dessen gegenüberliegenden Ende,
wobei die Solenoid-Spule eingerichtet ist, den Anker vom Ventilsitzelement weg zu einer offenen Stellung zu bewegen und somit das **dadurch** gebildete Ventil zu öffnen, um gasförmigen Treibstoff vom Einlaß (11a) zur Auslaßleitung (11b) des Gehäuses hindurchzulassen,
**dadurch gekennzeichnet, daß** der Anker im wesentlichen rechteckförmig und innerhalb eines Distanzrings (14) angeordnet ist und zwischen Seitenkanten des Ankers und dem Distanzring (14) Seitenräume (10a, 10b) ausgebildet sind, durch die Treibstoff vom Einlaß (11a) zum Ventilsitzelement (15) strömen kann, wenn sich der Anker (13) in seiner offenen Stellung befindet.

2. Treibstoff-Injektor nach Anspruch 1, wobei der Anker gegenüber der dem Ventilsitzelement (15) gegenüberliegenden flachen Fläche eine zweite flache Fläche aufweist und an dieser eine Blattfeder (24) zur Positionierung des Ankers gegenüber dem Ventilsitzelement (15) und dem Distanzring (14) sowie zum elastischen Drängen des Ankers zum Ventilsitzelement hin angebracht ist.

3. Treibstoff-Injektor nach Anspruch 1 oder 2 mit einer Resonanzkammer-Einrichtung (18) und einem Kanal (16) in Verbindung mit dem Auslaß (11b) zum Dämpfen von Schall.

4. Treibstoff-Injektor nach einem der vorhergehenden Ansprüche, wobei der Distanzring (14) eine vorbestimmte Höhe aufweist, die den Bewegungsweg des Ankers (13) zwischen seiner offenen und seiner geschlossenen Stellung bestimmt.

5. Treibstoff-Injektor nach einem der vorhergehenden Ansprüche, wobei der Anker eine darin ausgebildete Mittelöffnung (13a) für den Durchtritt von zusätzlichem Treibstoff, wenn er sich in seiner offenen Stellung befindet, aufweist.

6. Treibstoff-Injektor nach einem der vorhergehenden Ansprüche, der einstückig ausgebildet ist.

7. Treibstoff-Injektor nach einem der Ansprüche 1 bis 5, wobei das Gehäuse zwei von einem Distanzstück (14) getrennte Gehäuseteile (11, 15) aufweist und der Anker (13) zwischen den beiden Gehäuseteilen befestigt ist.

8. Treibstoff-Einspritzsystem, aufweisend:
mindestens einen Treibstoff-Injektor nach einem der Ansprüche 1 bis 7,
eine Einrichtung zur Zufuhr von gasförmigem Treibstoff zum Treibstoff-Einlaß (11a) des Injektors,
eine Einrichtung zur Ableitung von gasförmigem Treibstoff von der Auslaßleitung (11b) des Injektors, und
eine Steuereinrichtung zur Lieferung von Steuerimpulsen an die Solenoid-Spule (12), um den Anker (13) von seiner geschlossenen in seine offene Stellung zu bewegen.

## Revendications

1. Un injecteur de combustible gazeux, pour utilisation dans une alimentation en combustible gazeux, l'injecteur comprenant:
- un boîtier (11);
- un injecteur commandé électriquement ayant une armature (13) et une bobine de solénoïde (12) montée dans ledit boîtier;
- un organe formant siège de soupape (15) unique;
- la dite armature (13) ayant une surface sensiblement plane, en relation opposée et sensiblement parallèle audit organe formant siège de soupape;
- des moyens (23, 24) pour déplacer ladite armature pour placer sa surface plane en butée contre l'organe formant siège de soupape, pour fournir une position de soupape fermée;
- une entrée (11a) pour du combustible gazeux, à une extrémité dudit boîtier, et un passage d'entrée (11b) unique, à son extrémité opposée; et
- dans lequel ladite bobine de solénoïde est susceptible de fonctionner pour écarter ladite armature dudit organe formant siège de soupape, en passant à une position ouverte, de manière à ouvrir la soupape formée de cette manière, afin de permettre au combustible gazeux de passer de ladite entrée (11a) vers ledit passage de sortie (11b) dudit boîtier,
**caractérisé en ce que** ladite armature est globalement rectangulaire et positionnée à l'intérieur d'une bague-entretoise (14), et des espaces latéraux (10a, 10b), à travers lesquels du combustible peut s'écouler depuis l'entrée (11a) vers l'organe formant siège de soupape (15), lorsque l'armature (13) se trouve à sa position ouverte, sont définis entre des bords latéraux de l'armature et la bague-entretoise (14).

2. L'injecteur de combustible selon la revendication 1, dans lequel ladite armature présente une deuxième surface plane opposée à la surface plane, en relation opposée à l'organe formant siège de soupape (15), et comprenant en outre un ressort à lame (24) fixé sur ladite deuxième surface plate, pour positionner l'armature par rapport à l'organe formant siège de soupape (15) et à la bague-entretoise (14), et pour déplacer élastiquement ladite armature en direction de l'organe formant siège de soupape.

3. L'injecteur de combustible selon la revendication 1 ou la revendication 2, comprenant en outre des moyens formant chambre de résonance (18) et un canal (16) communicant avec la sortie (11b) pour diminuer le bruit.

4. L'injecteur de combustible selon l'une quelconque des revendications précédentes, dans lequel ladite entretoise (14) présente une longueur prédéterminée, déterminant la distance de déplacement de ladite armature (13) entre ses positions ouverte et fermée.

5. L'injecteur de combustible selon l'une quelconque des revendications précédentes, dans lequel ladite armature présente une ouverture centrale (13a), formée en son sein pour faire passer du combustible additionnel à travers elle, lorsque ladite armature est sa position ouverte.

6. L'injecteur de combustible selon l'une quelconque des revendications précédentes, dans lequel ledit injecteur est formé d'une seule pièce.

7. Un injecteur selon l'une quelconque des revendications 1 à 5, dans lequel le boîtier comprend deux parties de boîtier (11, 15), séparées par une entretoise (14), et l'armature (13) est montée entre les deux parties de boîtier.

8. Un système d'injection de combustible comprenant:
- au moins un injecteur de combustible, selon l'une quelconque des revendications 1 à 7;
- des moyens pour fournir du combustible gazeux à l'entrée de combustible (11a) de l'injecteur;
- des moyens pour guider du combustible gazeux depuis le passage de sortie (11b) de l'injecteur; et
- des moyens de commande pour fournir des impulsions de commande à ladite bobine de solénoïde (12) afin d'entraîner ladite armature (13) pour la faire passer de sa position fermée à sa position ouverte.
